# EUROPÄISCHE PATENTSCHRIFT

(11) **EP 0 987 886 B1**
(45) Veröffentlichungstag und Bekanntmachung des Hinweises auf die Patenterteilung: **15.03.2006**
(21) Anmeldenummer: 99202834.0
(22) Anmeldetag: 01.09.1999
(51) Int. Cl.: H04N 5/265, H04N 5/262

(54) **Programmierbares Zusatzbedienpult für eine Videomischeinrichtung**
Programmable supplementary operating panel for a video mixing device
Pupitre additionel programmable pour un dispositif de table de mixage

(30) Priorität: 10.09.1998 DE 19841300
(43) Veröffentlichungstag der Anmeldung: 22.03.2000
(73) Patentinhaber: BTS Holding International B.V., 4827 HG Breda (NL)
(72) Erfinder: Sturm, Rainer, 22335 Hamburg (DE); Krug, Alfred, 22335 Hamburg (DE); Schöpper, Clemens, 22335 Hamburg (DE); Bork, Reiner, 22335 Hamburg (DE); Foedrowitz, Andreas, 22335 Hamburg (DE)
(74) Vertreter: Lindemann, Robert

(56) Entgegenhaltungen:
- DE-A- 19 713 027

## Beschreibung

Die Erfindung betrifft eine Mischeinrichtung mit einem Mischer für Videosignale und mit einem ersten Bediengerät, das Steuersignale in Abhängigkeit von der jeweiligen Stellung von Bedienelementen an den Mischer sendet und bei dem der Mischer zum Anschluss wenigstens eines zweiten Bediengerätes vorgesehen ist und einer Steuervorrichtung zur Steuerung der Mischvorgänge innerhalb der Mischeinrichtung.

Durch die Zunahme der Funktionen die eine Videomischeinrichtung bereitstellt, gestaltete sich die Bedienung aller dieser Funktionen mittels eines einzigen Bediengerätes als sehr unübersichtlich. Aus der nicht vorveröffentlichten DE 19713027.5 ist daher eine Mischeinrichtung für Videosignale bekannt, bei welcher zusätzlich zu einem Bediengerät ein Zusatzbediengerät mit einer graphischen Benutzeroberfläche vorgesehen ist. Dadurch kann das Bedienfeld von Bedienungsmitteln freigehalten werden, so dass die von diesen Bedienmitteln gesteuerten Funktionen nunmehr ausschließlich mittels des Zusatzbediengerätes vorgenommen werden können.

Dennoch sind die Anforderungen an das Bedienpersonal relativ hoch geblieben.

Aufgabe der vorliegenden Erfindung ist es, eine Mischeinrichtung für Videosignale mit verbesserter Bedienbarkeit anzugeben.

Diese Aufgabe wird erfindungsgemäß dadurch gelöst, dass die Steuervorrichtung in wenigstens zwei verschiedene Zustände versetzt werden kann, wobei in einem ersten Zustand Bedienelemente des zweiten Bediengerätes Bedienelementen des ersten Bediengerätes zuordenbar sind, und dass in einem zweiten Zustand auf Grund der im ersten Zustand erfolgten Zuordnung die Steuervorrichtung Stellzustandsveränderungen der Bedienelemente des zweiten Bediengerätes umsetzt in Stellzustandveränderungen des ersten Bediengerätes.

Auf diese Weise können von einer Bedienperson beliebige Bedienungsvorgänge welche am Bediengerät vorgenommen werden müssen, nunmehr auch auf die Bedienelemente des zweiten Bediengerätes verlagert bzw. kopiert werden. Auf diese Weise kann die Bedienperson von ihr völlig frei auswählbare Funktionsmerkmale von einer geigneten Hilfsperson am zweiten Bediengerät ausführen lassen. Im Gegensatz zu einer Unterstützung durch eine Hilfsperson am eigentlichen Bediengerät, die von der eigentlichen Bedienperson wegen der oft beengten räumlichen Situation eher als lästig denn als unterstützend empfunden werden kann, kann die Hilfsperson an einem eigenen Bedienfeld, welches vom eigentlichen Bedienfeld örtlich abgesetzt aufgestellt werden kann, arbeiten, ohne die Bedienperson zu stören. Darüber hinaus ist auf diese Weise auch sichergestellt, dass die Hilfsperson nur die Funktionen ausführen kann, die dem zweiten Bediengerät zugewiesen sind. Oft sind ja die von einem Bediengerät angebotenen vielfältigen Möglichkeiten für Hilfspersonen, die nicht ständig an einem großen Bedienfeld arbeiten und darin geübt sind, eher unüberschaubar und verwirrend. Fehlbedienungen werden mit einem zweiten Bedienfeld, welches nur ausgewählte Funktionen zuläßt, daher erheblich reduziert werden.

Die Zuordnung der Bedienelemente kann von der Bedienperson beispielsweise über Eingabegeräte wie Tastatur oder mit Mausunterstützung über eine Bildschirmanzeige vorgenommen werden.

In einer vorteilhaften Ausgestaltung der Erfindung vergleicht der Steuerrechner eintreffende Stellzustandsänderungen miteinander und ordnet zeitgleiche Stellzustandsänderungen von Bedienelementen unterschiedlicher Bediengeräte einander zu. Hierdurch ergibt sich für eine Bedienperson eine sehr einfache Möglichkeit die Funktionen der Bedienelemente auf ein anderes Bedienfeld zu übertragen, ohne hierzu getrennte Eingabegeräte benutzen zu müssen. Die Bedienperson muss die Mischeinrichtung lediglich in einen Programmiermodus versetzen und drückt, bzw. bewegt die Bedienelemente die einander zugeordnet werden sollen.

Vorzugsweise ist die Steuervorrichtung so ausgestaltet, dass die Steuervorrichtung nur einander kompatible Bedienelemente einander zuordnet. So kann die Funktion die mittels einer Drucktaste ausgelöst wird, wieder nur einer Drucktaste, die Funktion die mittels Drehknopf ausgelöst wird, kann wiederum einem Drehknopf aber auch einem Schieberegler zugeordnet werden.

Vorzugsweise weist das zweite Bedienfeld auch Anzeigefelder auf, welche die den Bedienelementen zugewiesenen Funktion beschreiben. Von Vorteil ist ferner die Möglichkeit, die jeweils zugewiesenen Funktion zentral zu speichern und bei Bedarf durch einfachen Aufruf, beispielsweise eines Dateinamens wiederherzustellen.

Ausführungsbeispiele der Erfindung sind in der Zeichnung anhand mehrerer Figuren dargestellt und in der nachfolgenden Beschreibung näher erläutert. Es zeigen:

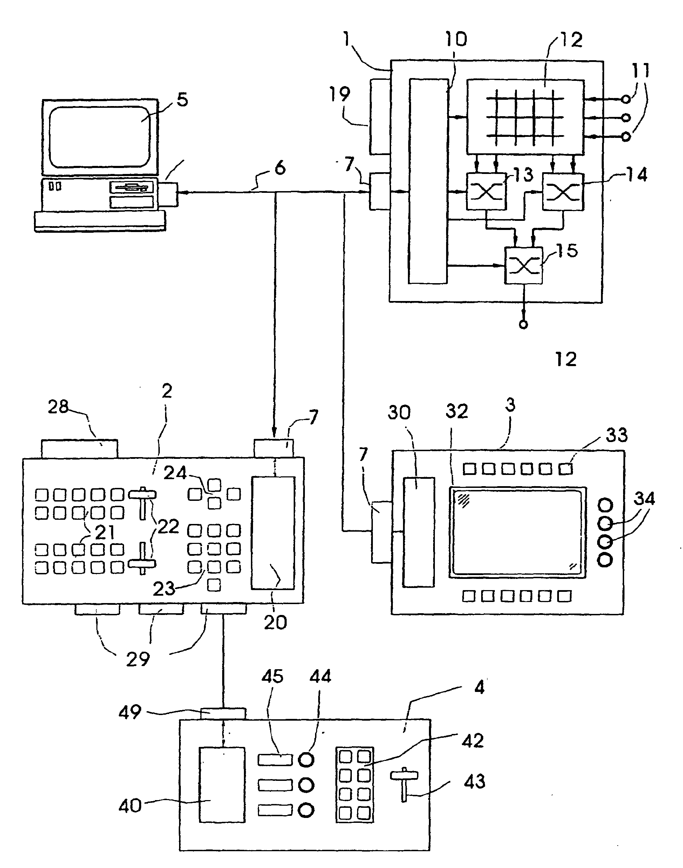

Fig. 1 ein Blockschaltbild einer erfindungsgemäßen Mischeinrichtung

Bei der in Fig. 1 dargestellten Mischeinrichtung sind ein Videomischer 1, ein Hauptbediengerät 2, ein Zusatzbediengerät 3, ein Hilfsbediengerät 4 und ein Personalcomputer 5 über ein lokales Netzwerk 6, vorzugsweise ein Cheapernet, miteinander verbunden. Der Personalcomputer 5 ist optional und braucht zur Erläuterung der Erfindung nicht näher beschrieben zu werden. Videomischer 1, Hauptbediengerät 2, Zusatzbediengerät 3 und der Personalcomputer 5 enthalten eine Schnittstelle in Form einer Netzwerkkarte 7.

Ebenso ist der Videomischer 1 an sich bekannt. Zur Veranschaulichung sind jedoch beispielhaft Eingänge 11 für Videosignale, eine Kreuzschiene 12 und Überblendschaltungen 13, 14, 15 sowie ein Ausgang 16 dargestellt. Die Kreuzschiene 12 und die Überblendschaltungen 13 bis 15 werden von einem internen Rechner 10 gesteuert, der über das lokale Netzwerk eintreffende Befehle in Stellsignale für die Kreuzschiene 12 und die Überblendschaltungen 13 bis 15 umsetzt und Zustandsinformationen von der Mischeinrichtung über das lokale Netzwerk 6 den anderen Komponenten zuleitet.

Das ebenfalls seiner Art nach bekannte Hauptbediengerät 2 enthält einen internen Steuerrechner 20, Tasten 21 zur Auswahl der zu mischenden Videosignale, Überblendregler 22 und eine Reihe von anderen Bedienelementen, die in Fig. 1 nicht dargestellt sind. Solche Bedienelemente dienen beispielsweise zur Auswahl von Trickfiguren (Key patterns, Schablonen) oder zur Einstellung von Farbsignalwerten für Zwecke des Chromakeys oder für Farbflächengeneratorsignale (Mattesignale). Bei letzteren handelt es sich um Signale, die eine im wesentlichen ein- oder zweifarbige Fläche mit kontinuierlichen oder trickmustergesteuerten Farbübergängen darstellen und bei Bedarf als Hintergrundsignal oder zum Ausfüllen anderer Flächen im Bild verwendet werden können. Zur Eingabe von Zahlenwerten ist bei dem Hauptbediengerät 2 ferner eine Zehnertastatur 23 vorgesehen. Es können von der Mischeinrichtung auch Videorecorder, Laserdisks, Diskrecorder oder Video-Effektgeräte bedient, insbesondere positioniert und in den Wiedergabe- bzw. Aufnahmebetrieb geschaltet werden. Dazu sind bei dem dargestellten Hauptbediengerät 2 mehrere Tasten 24 vorgesehen.

Sowohl das Bediengerät 2 als auch der Mischer 1 weisen jeweils mehrere Aus- und Eingänge (Ports) 19, 29 auf, über die weitere Geräte angeschlossen und gesteuert werden können, wie beispielsweise Kreuzschienen, Videorecorder und Video-Effektgeräte. Darüber hinaus weist das Hauptbedienfeld 2 nun auch Anschlussmöglichkeiten 29 zum Anschluss von mehreren Hilfsbediengeräten auf.

Das aus der eingangs genannten Patentanmeldung bekannte Zusatzbediengerät 3 enthält als Steuervorrichtung im wesentlichen einen Personalcomputer 30, an den eine Bildwiedergabeeinrichtung 31 und ein Eingabetastenfelder 32 angeschlossen sind. Der Bildschirm der Wiedergabeeinrichtung kann beispielsweise von einem Flüssigkristall-display in TFT-Technik gebildet sein. Mit Hilfe geeigneter Programme ist der Bildschirm 31 als graphische Benutzerschnittstelle (Graphic User Interface) ausgebildet, wobei die Bedienelemente der Eingabetastenfelder 32 um den Bildschirmrand angeordnet sind und im Kontext zum jeweiligen Inhalt des Bildschirms 31 stehen. Am rechten Rand des Bildschirms sind digitale Drehgeber 34 - im folgenden Digipots genannt - angeordnet.

Das Hilfsbediengerät 4 enthält als Steuereinrichtung ebenfalls einen internen Steuerrechner 40 welcher die Stellzustände von am Hilfsbediengerät 4 angeordneten Tastenelementen eines Tastenfeldes 42, eines Mischerhebels 43 und von Digipots 44 regelmäßig abfrägt. Änderungen der Stellzustände werden über eine serielle Schnittstelle 49 zu der seriellen Schnittstelle 29 des Hauptbediengerätes 2 übertragen. Die Wahl der Übertragung ist für die Erfindung nicht ausschlaggebend, denkbar ist beispielsweise auch die Möglichkeit die Steuereinrichtung 40 des Hilfsbedienpultes mit einer eigenen Netzkarte zu versehen und sie direkt an das Netz 6 anzuschließen.

Das Hilfsbediengerät 4 weist ferner Anzeigevorrichtung 45 auf, mittels welchen einzelnen Bedienelementen erläuternde Textdarstellungen zugeordnet werden können. Der Zuordnungsvorgang von Bedienfunktionen des Hauptbediengerätes bzw. des Zusatzbediengerätes zu den Bedienelementen des Hilfsbediengerätes wird im Ausführungsbeispiel durch gleichzeitiges Drücken zweier bestimmter Tasten des Hilfsbediengerätes eingeleitet. Dieser Programmodus wird über die serielle Schnittstelle 49 vom Steuerrechner des Hilfsbediengerätes 4 zum Steuerrechner des Hauptbediengerätes 2 weitergemeldet. Vom Steuerrechner des Hauptbedienfeldes 2 wird der Programmiermodus über das Netzwerk 6 schließlich zum Steuerrechner 10 der Mischeinrichtung 1 weitergeleitet. In der Mischeinrichtung 1 führt der Steuerrechner 10 eine Zuordnungstabelle, welche eine Aufstellung aller Bedienelemente für alle anschließbaren Hilfsbediengeräte enthalten ist. Erhält nun der Steuerrechner 10 der Mischeinrichtung 1 während des Programmiermodus gleichzeitig die Meldung, dass ein Bedienelement des Hauptbediengerätes 1 bzw. des Zusatzbediengerätes 2 und ein Bedienelement eines angeschlossenen Hilfsbediengerätes 4 betätigt wird, so prüft der Steuerrechner 10 zunächst ob die Zuordnung dieser Bedienelemente sinnvoll ist.

Vorzugsweise ist hierzu im Steuerrechner 10 eine Kompatibilitätstabelle gespeichert, in welcher einander funktional entsprechende Bedienelemente aufgelistet sind. Funktional entsprechen sich beispielsweise Dreh-und Schieberegler weil beide ein Ausgangssignal in Abhängigkeit von der Stellung des Dreh- bzw. Schiebereglers abgeben. Kann der Steuerrechner 10 in der Kompatibilitätsliste keine erlaubte Zuordnung finden, wird die versuchte Zuordnung mit einer Fehlermeldung verweigert. Bei erlaubter Zuordnung vermerkt der Steuerrechner 10 in der Zuordnungstabelle an der Stelle, die der betätigten Taste des Hilfsbediengerätes entspricht, die Funktion des Bedienelementes, welches am Hauptbediengerät 2 bzw. am Zusatzbediengerät 3 betätigt wurde. Zum Abschluss des Programmiermodus muss die Bedienperson wieder die zwei entsprechenden Tasten drücken. Nach Erhalt der Meldung, dass die entsprechenden Tasten am Hilfsbediengerät gedrückt wurden, kehrt der Steuerrechner 10 der Mischvorrichtung vom Programmiermodus in den normalen Betriebsmodus zurück.

Sobald der Steuerrechner 10 der Mischvorrichtung 1 im normalen Betriebsmodus die Meldung erhält, dass ein Bedienelement am Hilfsbedienfeld 4 betätigt wurde, schaut der Steuerrechner in der Zuordnungstabelle nach, welche Funktion diesem Bedienelement zugeordnet ist, und führt diese Funktion aus, als sei diese Funktion am Bedienfeld des Hauptbediengerätes 2 oder am Zusatzbediengerät 3 ausgelöst worden.

Vorteilhaft ist die Möglichkeit die Zuordnungstabelle als Datei im Personalcomputer 5 abzuspeichern. So können Produktionen vorbereitet werden und bei Bedarf die abgespeicherten Zuordnungen durch Lesen der entsprechenden Datei im Steuerrechner 10 der Mischvorrichtung 1 wiederhergestellt werden.

Das Ausführungsbeispiel beschrieb die Möglichkeit, die Zuordnungstabelle im Steuerrechner 10 der Mischvorrichtung 1 bereitzustellen. Da die verwendeten Bestandteile des Mischers über jeweils eigene Steuerrrechner verfügen, sind auch andere Konstellationen möglich, wie beispielsweise speichern von Zuordnungstabellen in den Steuerrechnern des Hauptbediengerätes 2 oder / und des Zusatzbediengerätes 3 die ebenfalls von der Erfindung mitumfasst sind. Der Anschluss von Hilfsbediengeräten ist nicht nur auf den Anschluss an das Hauptbediengerät beschränkt, vielmehr können unterschiedlich ausgestatte Hilfsbediengeräte auch beispielsweise zum Anschluss an das Zusatzbediengerät ausgestaltet sein.

## Patentansprüche

1. Mischeinrichtung mit einem Mischer für Videosignale und mit einem ersten Bediengerät, das Steuersignale in Abhängigkeit von der jeweiligen Stellung von Bedienelementen an den Mischer sendet und bei dem der Mischer zum Anschluss wenigstens eines zweiten Bediengerätes vorgesehen ist und einer Steuervorrichtung zur Steuerung der Mischvorgänge innerhalb der Mischeinrichtung, **dadurch gekennzeichnet, dass** die Steuervorrichtung (10) in wenigstens zwei verschiedene Zustände versetzt werden kann, wobei in einem ersten Zustand Bedienelemente (42) des zweiten Bediengerätes (4) Bedienelementen (21) des ersten Bediengerätes (2) zuordenbar sind, und dass in einem zweiten Zustand auf Grund der im ersten Zustand erfolgten Zuordnung die Steuervorrichtung (10) Stellzustandsveränderungen der Bedienelemente (42) des zweiten Bediengerätes (4) umsetzt in Stellzustandsveränderungen des ersten Bediengerätes (2).

2. Mischeinrichtung nach Anspruch 1, **dadurch gekennzeichnet, dass** im ersten Zustand der Steuerrechner (10) eintreffende Stellzustandsänderungen miteinander vergleicht und zeitgleiche Stellzustandsänderungen von Bedienelementen (23, 43) unterschiedlicher Bediengeräte (2, 4) einander zuordnet.

3. Mischeinrichtung nach Anspruch 2, **dadurch gekennzeichnet, dass** die Steuervorrichtung (10) nur einander kompatible Bedienelemente einander zuordnet.

4. Mischeinrichtung nach Anspruch 1 oder 2, **dadurch gekennzeichnet, dass** der Steuerrechner dazu vorgesehen ist die Zuordnungstabelle für einen späteren Aufruf auf einen Datenträger zu speichern.

## Claims

1. A mixing device comprising a video signal mixer and a first operating device, which transmits control signals to the mixer in dependence upon the respective settings of operating elements, wherein the mixer is provided for connecting at least a second operating device, and comprising a control device for controlling the mixing processes within the mixing device, **characterised in that** the control device (10) can be set to at least two different states, wherein, in a first state, operating elements (42) of the second operating device (4) are assignable to operating elements (21) of the first operating device (2), and, in a second state, the control device (10) converts changes of settings of the operating elements (42) of the second operating device (4) into changes of settings of the first operating device (2) on the basis of the assignment realized in the first state.

2. Mixing device according to claim 1, **characterised in that,** in the first state, the control computer (10) compares incoming changes of settings with each other and assigns simultaneous changes of settings of operating elements (23, 43) to different operating devices (2, 4).

3. Mixing device according to claim 2, **characterised in that** the control device (10) only assigns compatible operating elements to each other.

4. Mixing device according to claim 1 or 2, **characterised in that** the control computer is provided to store the assignment table on a data carrier for later recall.

## Revendications

1. Dispositif de table de mixage avec un mélangeur pour des signaux vidéo et avec un premier pupitre qui envoie des signaux de commande en fonction de la position respective d'éléments de commande au mélangeur et dans lequel le mélangeur est prévu pour le raccordement d'au moins un deuxième pupitre, ainsi qu'un dispositif de commande des processus de mixage au sein du dispositif de table de mixage
**caractérisé en ce que**
le dispositif de commande (10) peut être placé dans au moins deux états différents, les éléments de commande (42) du deuxième pupitre (4) étant associés, dans un premier état, aux éléments de commande (21) du premier pupitre (2), et **en ce que** dans un deuxième état, en raison de l'association effectuée dans le premier état, le dispositif de commande (10) change les modifications de position des éléments de commande (42) du deuxième pupitre (4) en modifications de position du premier pupitre (2).

2. Dispositif de table de mixage selon la revendication 1,
**caractérisé en ce que**
dans le premier état, l'ordinateur de commande (10) compare des modifications d'état de commande se produisant entre elles et associe entre elles les modifications de position identiques, en termes temporels, des éléments de commande (23, 43) de pupitres différents (2, 4).

3. Dispositif de table de mixage selon la revendication 2,
**caractérisé en ce que**
le dispositif de commande (10) associe uniquement des éléments de commande compatibles entre eux.

4. Dispositif de table de mixage selon la revendication 1 ou 2,
**caractérisé en ce que**
l'ordinateur de commande est prévue pour mémoriser la table d'allocation sur un support de données pour un appel ultérieur.
